# EUROPEAN PATENT APPLICATION

(11) **EP 4 528 986 A1**
(43) Date of publication of application: **26.03.2025**
(21) Application number: 23866977.4
(22) Date of filing: 05.06.2023
(51) Int. Cl.: H02K 1/14, H02K 1/18, H02K 1/28

(54) **PERMANENT MAGNET MOTOR AND ELECTRIC DRIVE SYSTEM**

(30) Priority: 20.09.2022 CN 202211143555
(71) Applicant: Jing-Jin Electric Technologies Co., Ltd., Beijing 100015 (CN)
(72) Inventor: WANG, Xihong, Beijing 100015 (CN); ZHANG, Liangliang, Beijing 100015 (CN); ZHANG, Kaihe, Beijing 100015 (CN); CAI, Chunxia, Beijing 100015 (CN); XU, Xin, Beijing 100015 (CN); ZHANG, Yang, Beijing 100015 (CN); HAN, Lei, Beijing 100015 (CN); SUN, Biqing, Beijing 100015 (CN); XIONG, Chenao, Beijing 100015 (CN); LIU, Wenqi, Beijing 100015 (CN); TIAN, Bin, Beijing 100015 (CN); XIONG, Dongqin, Beijing 100015 (CN); SHU, Fei, Beijing 100015 (CN)
(74) Representative: Kleine, Hubertus
(86) International application number: PCT/CN2023/098318
(87) International publication number: WO 2024/060681

(57) **Abstract**

A permanent magnet motor and an electric drive system are disclosed. The permanent magnet motor comprises a stator and a rotor. The stator comprises a stator core segment (1), multiple stator teeth extending axially are provided on an inner circumferential surface of the stator core segment (1), a stator slot (3) is formed between two adjacent stator teeth, and an auxiliary slot (4) is provided on a top end of at least part of the stator teeth. The permanent magnet motor has the advantages of low motor vibration noise and high NVH quality.

## Description

### Cross-reference to related applications

This application claims priority to the Chinese patent application No. 202211143555.2 filed with the Chinese Patent Office on September 20, 2022 and entitled "A Permanent Magnet Motor and An Electric Drive System", which is incorporated by reference herein in its entirety.

### TECHNICAL FIELD

The present disclosure belongs to the technical field of motor stators, and specifically relates to a permanent magnet motor and an electric drive system.

### BACKGROUND

When the permanent magnet synchronous motor works, an electromagnetic torque is generated due to the interaction of magnetic fields of the armature and the rotor, thereby converting electrical energy into mechanical energy and achieving power output. The magnetic field of the armature is generated by the current in the stator, and the magnetic field of the rotor is provided by the permanent magnet in the rotor. The magnetic field of the armature and the magnetic field of the rotor will combine into an air gap magnetic field in the air gap of the motor. Due to the influence of factors such as the magnetic saturation of the iron core, the air gap magnetic field is not a standard sine wave and includes harmonic components. The harmonic components will produce torque fluctuations and noteworthy radial electromagnetic force waves at certain orders, thereby causing the motor to produce vibration noise, and thus reducing the NVH (noise, vibration, harshness) quality of the motor.

### SUMMARY

In view of the above problems, the present disclosure discloses a permanent magnet motor and an electric drive system to overcome or at least partially solve the above problems.

In order to achieve the above object, the present disclosure adopts the following technical solutions.

An aspect of the present disclosure provides a permanent magnet motor, which comprises a stator and a rotor; and
the stator comprises a stator core segment, multiple stator teeth extending axially are provided on an inner circumferential surface of the stator core segment, a stator slot is formed between two adjacent stator teeth, and an auxiliary slot is provided on a top end of at least part of the stator teeth.

Further, the rotor comprises multiple rotor core segments staggered by a first preset angle, there are multiple stator core segments, and the stator core segments and the rotor core segments are arranged correspondingly.

Further, the positions and/or quantities of the auxiliary slots on the stator core segments corresponding to different rotor core segments are different.

Further, the shapes, positions and quantity of the auxiliary slots on the stator core segments are consistent, and the stator core segments are staggered by a second preset angle.

Further, the auxiliary slots on the stator core segments are arranged periodically.

Further, one or more adjacent stator teeth not provided with the auxiliary slot at the top end are defined as a group, one or more adjacent stator teeth provided with the auxiliary slot at the top end are defined as a group, and the group of stator teeth not provided with the auxiliary slot at the top end and the group of stator teeth provided with the auxiliary slot at the top end are alternately arranged.

Further, the auxiliary slots axially run through the stator core segment.

Further, a radial cross-section of the auxiliary slot has an axially symmetric shape, and the auxiliary slot is provided at a middle position of the top end of the stator tooth, so that a symmetry axis of the axially symmetric shape coincides with a symmetry axis of the stator tooth.

Further, the radial cross-section of the auxiliary slot is arc-shaped, U-shaped or V-shaped.

Another aspect of the present disclosure provides an electric drive system, which comprises the permanent magnet motor as described above.

The advantages and beneficial effects of the present disclosure are as follows.

In the permanent magnet motor of the present disclosure, by providing the auxiliary slot at the top end of at least part of the stator teeth, the torque fluctuation and radial electromagnetic force wave jointly generated by the rotor core segment and the stator core segment can be suppressed to a lower level, and thus the torque fluctuation and radial electromagnetic force of the motor as a whole can be reduced, thereby effectively suppressing the generation of motor vibration noise and improving the NVH quality of the motor.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a partial view of the structure of a stator core segment and a rotor core segment in an embodiment of the present disclosure;
FIG. 2 is a radial cross-sectional view of three stator core segments in an embodiment of the present disclosure after being unfolded;
FIG. 3 is a partial view of the structure of any stator core in FIG. 2;
FIG. 4 is a radial cross-sectional view of a stator core segment in another embodiment of the present disclosure; and
FIG. 5 is a radial cross-sectional view of a stator core segment in yet another embodiment of the present disclosure.

In the drawings: 1, stator core segment; 2, stator tooth; 3, stator slot; 4, auxiliary slot; 5, rotor core segment; 6, through slot.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

The technical solutions provided by various embodiments of the present disclosure will be described in detail with reference to the accompanying drawings.

An embodiment of the present disclosure discloses a permanent magnet motor, which comprises a stator and a rotor.

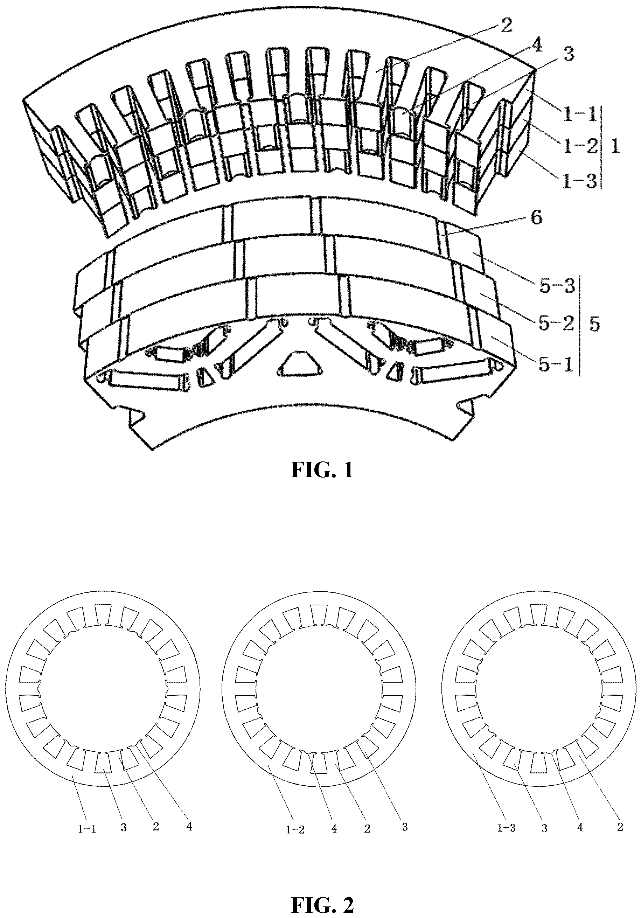

Specifically, as shown in FIGS. 1 to 3, the stator comprises a stator core segment 1, and multiple stator teeth 2 extending axially are provided on the inner circumferential surface of the stator core segment 1. The stator teeth 2 are wound by coil windings, and a stator slot 3 is formed between two adjacent stator teeth 2, so that the coil winding can be accommodated in the stator slot 3. An auxiliary slot 4 is provided on the top end of part of stator teeth 2, and the auxiliary slot 4 is open toward the direction of the rotor. Of course, the auxiliary slot 4 may be provided on the top end of all stator teeth 2.

In sum, in the permanent magnet motor of this embodiment, by providing the auxiliary slot at the top end of at least part of the stator teeth, the air gap between the stator and the rotor is increased, thereby reducing the radial electromagnetic force applied on the stator teeth, so that the torque fluctuation and radial electromagnetic force wave jointly generated by the rotor core segment and the stator core segment can be suppressed to a lower level, and thus the torque fluctuation and radial electromagnetic force of the motor as a whole can be reduced, thereby effectively suppressing the generation of motor vibration noise and improving the NVH quality of the motor. Moreover, the structural design of the auxiliary slot can reduce the weight of the stator without affecting the strength of the stator, thereby realizing the lightweight design of the motor.

In this embodiment, as shown in FIGS. 1 and 2, the rotor comprises three rotor core segments 5 that are staggered by a first preset angle, namely, the first rotor core segment 5-1, the second rotor core segment 5-2, and the third rotor core segment 5-3. The structural design of the rotor core segment 5 of staggering by the first preset angle can reduce the slot effect caused by the stator slot 3, so that the rotor rotates more smoothly. In addition, the outer circumferential surfaces of the three rotor core segments 5 are all provided with through slots 6 that axially extend, and the design of the through slots 6 can effectively disperse the harmonic energy, thereby optimizing the air gap magnetic flux waveform and further suppressing the vibration noise of the motor. Moreover, the quantity of stator core segments 1 is also three, namely, the first stator core segment 1-1, the second stator core segment 1-2, and the third stator core segment 1-3, and the three stator core segments 1 and the three rotor core segments 5 are arranged correspondingly. The first preset angle is determined according to the motor simulation. Of course, the quantities of the rotor core segments 5 and the stator core segments 1 may be other numerical values.

In addition, the positions and/or quantities of auxiliary slots on the stator core segments corresponding to different rotor core segments are different. Since the directions and angles of the rotor poles in different rotor core segments are different, the air gap magnetic flux waveforms formed on different rotor core segments will be different. This requires that the positions and/or quantities of the auxiliary slots be changed for different rotor core segments corresponding to the stator core segments on which the auxiliary slots are provided, thereby effectively reducing the harmonic content of the air gap magnetic flux on each rotor core segment, and achieving the object of suppressing the vibration noise of the motor.

Further, the shapes, positions and or quantities of the auxiliary slots on the stator core segments are consistent, and the stator core segments are staggered by a second preset angle. In this way, in terms of relative position, the structures of the stator core segments can be kept different, that is, the relative positions of the auxiliary slots on different stator core segments are different. The second preset angle is determined according to the motor simulation. In this embodiment, the stator core segments can be processed and manufactured using the same set of molds, thereby reducing the manufacturing cost of the permanent magnet motor.

Moreover, as shown in FIGS. 1 to 3, the auxiliary slot 4 axially runs through the stator core segment 1. By adopting the axially through structural design, the auxiliary slot 4 is easier to process, and it is also convenient to control the shape and size of the auxiliary slot 4, so that the consistency of the auxiliary slots 4 on the stator core segments 1 can be improved. Of course, the auxiliary slot 4 may be provided at the center position of the top end of the stator tooth 2. For example, the auxiliary slot is a circular arc slot provided on the top end of the stator tooth.

In this embodiment, the auxiliary slots on the stator core segment are arranged periodically, so that the symmetry of the stator core segment can be improved and the production of auxiliary slots on the stator core segment can be facilitated. Moreover, since the coil windings on the stator core segment are wound periodically, the electromagnetic force formed by the coil windings is also periodic. By arranging the auxiliary slots on the stator core segment periodically, the effect of suppressing the vibration noise of the motor can be improved.

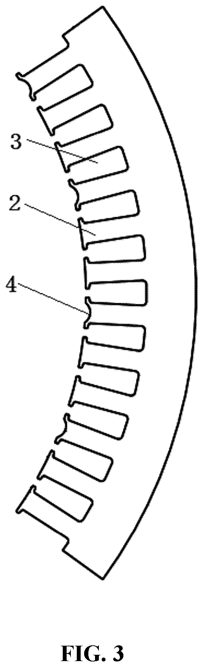

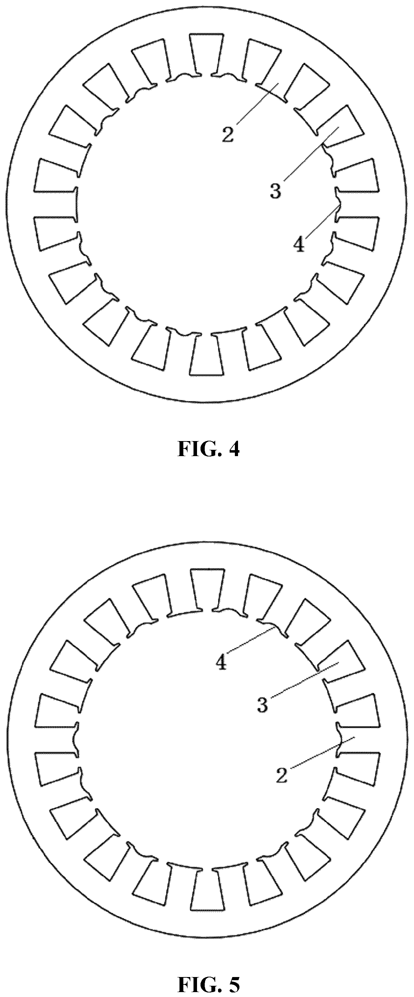

Further, one or more adjacent stator teeth not provided with the auxiliary slot at the top end are defined as a group, one or more adjacent stator teeth provided with the auxiliary slot at the top end are defined as a group, and the group of stator teeth not provided with the auxiliary slot at the top end and the group of stator teeth provided with the auxiliary slot at the top end are alternately arranged. Specifically, as shown in FIGS. 2 and 3, two adjacent stator teeth 2 not provided with the auxiliary slot 4 at the top end are defined as a group, one stator tooth 2 provided with the auxiliary slot 4 at the top end is defined as a group, and the two stator teeth 2 not provided with the auxiliary slot 4 at the top end and the one stator tooth 2 provided with the auxiliary slot 4 at the top end are arranged alternately. In another embodiment, alternatively, as shown in FIG. 4, two adjacent stator teeth 2 not provided with the auxiliary slot 4 at the top end are defined as a group, and four adjacent stator teeth 2 provided with the auxiliary slot 4 at the top end are defined as a group.

Of course, in other embodiments, the auxiliary slots may be arranged in a more complex periodic pattern. For example, as shown in FIG. 5, a stator tooth 2 not provided with the auxiliary slot 4 at the top end is followed by a stator tooth 2 provided with the auxiliary slot 4 at the top end, then followed by two stator teeth 2 not provided with the auxiliary slot 4 at the top end, and then followed by two stator teeth 2 provided with the auxiliary slot 4 at the top end, and so on.

In addition, the stator core segment is formed by stacking stator punching sheets, which can make the manufacturing process simpler. Moreover, the stator punching sheets are formed by punching, which can improve the consistency of the stator core segments.

In this embodiment, the radial cross-section of the auxiliary slot has an axially symmetric shape, and the auxiliary slot is provided at a middle position of the top end of the stator tooth, so that the symmetry axis of the axially symmetric shape coincides with the symmetry axis of the stator tooth. In this way, the overall symmetry of the stator core segment can be ensured, and the vibration noise suppression effect of the motor can be improved.

As shown in FIGS. 1 to 3, the radial cross-section of the auxiliary slot 4 is circular arc-shaped. Since the air resistance of the circular arc shape is small, the resistance generated when the motor is started can be reduced. Of course, the radial cross-section of the auxiliary slot 4 may also be U-shaped or V-shaped, or has other shapes.

Another embodiment of the present disclosure discloses an electric drive system, which comprises the permanent magnet motor as stated in the above embodiments, and has the advantages of low vibration noise, high NVH quality, etc.

The above merely describes particular embodiments of the present disclosure. By the teaching of the present disclosure, a person skilled in the art can make other modifications or variations based on the above embodiments. A person skilled in the art should appreciate that, the detailed description above is only for the purpose of explaining the present disclosure, and the protection scope of the present disclosure should be subject to the protection scope of the claims.

## Claims

1. A permanent magnet motor, **characterized by** comprising:
a stator and a rotor;
the stator comprises a stator core segment (1), multiple stator teeth extending axially are provided on an inner circumferential surface of the stator core segment (1), a stator slot (3) is formed between two adjacent stator teeth, and an auxiliary slot (4) is provided on a top end of at least part of the stator teeth.

2. The permanent magnet motor according to claim 1, **characterized in that**: the rotor comprises multiple rotor core segments (5) staggered by a first preset angle, there are multiple stator core segments (1), and the stator core segments (1) and the rotor core segments (5) are arranged correspondingly.

3. The permanent magnet motor according to claim 2, **characterized in that**: positions and/or quantities of the auxiliary slots (4) on the stator core segments (1) corresponding to different rotor core segments (5) are different.

4. The permanent magnet motor according to claim 2, **characterized in that**: shapes, positions and quantity of the auxiliary slots (4) on the stator core segments (1) are consistent, and the stator core segments (1) are staggered by a second preset angle.

5. The permanent magnet motor according to claim 1, **characterized in that**: the auxiliary slots (4) on the stator core segment (1) are arranged periodically.

6. The permanent magnet motor according to claim 5, **characterized in that**: one or morel adjacent stator teeth not provided with the auxiliary slot (4) at the top end are defined as a group, one ormore adjacent stator teeth provided with the auxiliary slot (4) at the top end are defined as a group, and the group of stator teeth not provided with the auxiliary slot (4) at the top end and the group of stator teeth provided with the auxiliary slot (4) at the top end are alternately arranged.

7. The permanent magnet motor according to any one of claims 1 to 6, **characterized in that**: the auxiliary slots (4) axially run through the stator core segment (1).

8. The permanent magnet motor according to any one of claims 1 to 6, **characterized in that**: a radial cross-section of the auxiliary slot (4) has an axially symmetric shape, and the auxiliary slot (4) is provided at a middle position of the top end of the stator tooth (2), so that a symmetry axis of the axially symmetric shape coincides with a symmetry axis of the stator tooth (2).

9. The permanent magnet motor according to claim 8, **characterized in that**: the radial cross-section of the auxiliary slot (4) is arc-shaped, U-shaped or V-shaped.

10. An electric drive system **characterized by** comprising the permanent magnet motor according to any one of claims 1 to 9.
